# EUROPEAN PATENT APPLICATION

(11) **EP 4 718 593 A1**
(43) Date of publication of application: **01.04.2026**
(21) Application number: 25191861.1
(22) Date of filing: 25.07.2025
(51) Int. Cl.: H01M 50/15, H01M 50/171, H01M 50/176, H01M 50/186, H01M 50/188, H01M 50/342, H01M 50/367, H01M 50/383, H01M 50/55, H01M 50/627, H01M 50/593, H01M 10/052, H01M 50/271, H01M 50/553

(54) **BATTERY CELL AND BATTERY MODULE**

(30) Priority: 27.09.2024 KR 20240131904
(71) Applicant: SAMSUNG SDI CO., LTD., Yongin-si, Gyeonggi-do 17084 (KR)
(72) Inventor: YANG, Jongwoon, 17084 Yongin-si (KR); KIM, Jeongwoo, 17084 Yongin-si (KR)
(74) Representative: Marks & Clerk LLP

(57) **Abstract**

Provided are a battery cell and a battery module. The battery cell comprises a case comprising a space for accommodating an electrode assembly, a cap plate placed in an opening of the case to seal the case and comprising an electrolyte inlet formed therein, a first terminal and a second terminal installed to protrude outwardly through the cap plate, and a cell cap placed on a top side of the case to cover the cap plate.

## Description

### FIELD

The present disclosure relates to a battery cell and a battery module.

### BACKGROUND

A secondary battery can be charged and discharged, unlike a primary battery that cannot be recharged. Low-capacity battery cells are used in small portable electronic devices such as smartphones, feature phones, laptop computers, digital cameras, and camcorders, and high-capacity battery cells are used as motor-driving power sources, power-storing batteries, etc., for hybrid vehicles, electric vehicles, etc. Such a battery cell may include an electrode assembly including a positive electrode and a negative electrode, a case accommodating the electrode assembly, an electrode terminal connected to the electrode assembly, etc.

Meanwhile, large-capacity battery cells may be used as battery modules in which a large number of battery cells are connected in series and/or parallel to provide high energy density.

### SUMMARY

The present disclosure provides a battery cell with improved safety and stability and a battery module including the battery cell.

However, technical problems to be solved by the present disclosure are not limited to the above-mentioned problem, and other problems not mentioned may be clearly understood by those of ordinary skill in the art from the description of the present disclosure described below.

According to an aspect of the present disclosure, a battery cell includes a case including a space configured to accommodate (or for accommodating) an electrode assembly, a cap plate, placed in an opening of the case, (configured) to seal the case and including an electrolyte inlet formed therein, a first terminal and a second terminal installed to protrude outwardly through the cap plate, and a cell cap placed on a top side of the case such that the cap plate is covered (or to cover the cap plate).

The battery cell may further include a terminal insulating member placed adjacent to the first terminal and/or the second terminal.

The cell cap may include a space therein to accommodate at least a part of the top side of the case.

The cell cap may be placed to overlap a junction portion between the case and the cap plate.

The cell cap may include a material including mica.

The battery cell may further include a cell cap accommodating member configured to accommodate (or for accommodating) the cell cap.

The cell cap may include a first terminal hole positioned (or formed) such that the first terminal passes through the first terminal hole and a second terminal hole positioned (or formed) such that the second terminal passes through the second terminal hole.

The cap plate may include a vent portion including a notch, and at least a part of the vent portion is dented toward the inside of the case.

The cap plate may comprise a vent portion comprising at least a part dented toward inside of the case and comprising a notch.

The cell cap may be placed such that the cell cap covers the top side of the vent portion such that the dented part of the vent portion is maintained.

The cell cap may be placed to cover the top side of the vent portion to maintain the dented part of the vent portion.

According to another aspect of the present disclosure, a battery cell includes a case including a space configured to accommodate (or for accommodating) an electrode assembly, a cap plate, placed in an opening of the case, (configured) to seal the case and including an electrolyte inlet formed therein, a first terminal and a second terminal installed to protrude outwardly through the cap plate, an upper insulating member placed on the top side of the case configured to cover at least a part of the cap plate, and a cell cap including a space configured to accommodate (or for accommodating) the upper insulating member.

The upper insulating member may be placed such that the upper insulating member overlaps with ( or to overlap) a junction portion between the case and the cap plate. The cell cap may include a first terminal hole positioned (or formed) such that the first terminal passes through the first terminal hole and a second terminal hole positioned (or formed) such that the second terminal passes through the second terminal hole.

The upper insulating member may include a third terminal hole positioned (or formed) to overlap the first terminal hole in at least a part thereof and a fourth terminal hole positioned (or formed) to overlap the second terminal hole in at least a part thereof.

The upper insulating member may include a material including mica.

The cell cap may include a material including a synthetic resin material (configured) to maintain a shape of the upper insulating member.

The upper insulating member may include an insulating material and a thermal insulating material.

The insulating material and the thermal insulating material may be formed in a layered structure.

The cap plate may include a vent portion including a notch, and at least a part of the vent portion is dented toward the inside of the case.

The cap plate may comprise a vent portion comprising at least a part dented toward inside of the case and comprising a notch.

The upper insulating member may be formed in a shape configured to cover the top side of the vent portion such that the dented part of the vent portion is maintained.

The upper insulating member may be formed in a shape to cover the top side of the vent portion to maintain the dented part of the vent portion.

According to another aspect of the present disclosure, a battery module includes the above-described battery cell.

At least some of the above and other features of the invention are set out in the claims.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure described later, so the present disclosure should not be construed as being limited to the matters shown in such drawings.
FIG. 1 is an exploded perspective view schematically showing an example of a battery module according to some embodiments of the present disclosure;
FIG. 2 is a perspective view schematically showing an example of a holder and a bus bar of the battery module of FIG. 1, according to some embodiments;
FIG. 3 is a perspective view schematically showing an example a battery cell of the battery module of FIG. 1, according to some embodiments;
FIG. 4 is a cross-sectional view schematically showing an example of a cross-section I-I' of FIG. 1, according to some embodiments;
FIG. 5 is a view for briefly describing a state in which fire occurs in a battery module, according to some embodiments;
FIG. 6 is a perspective view schematically showing a battery cell according to an embodiment of the present disclosure, according to some embodiments;
FIG. 7 is a perspective view schematically showing a battery cell according to another embodiment of the present disclosure, according to some embodiments;
FIG. 8 is an exploded perspective view schematically showing the battery cell of FIG. 7, according to some embodiments;
FIG. 9 is a cross-sectional view schematically showing an example of a cross-section II-II' of FIG. 7, according to some embodiments;
FIG. 10 is a perspective view schematically showing a battery cell according to another embodiment of the present disclosure, according to some embodiments;
FIG. 11 is an exploded perspective view schematically showing the battery cell of FIG. 10, according to some embodiments; and
FIG. 12 is a cross-sectional view schematically showing an example of a cross-section III-III' of FIG. 10, according to some embodiments.

### DETAILED DESCRIPTION

Hereinafter, embodiments of the present disclosure will be described in detail with reference to the accompanying drawings. The terms and words used in the present specification and claims described above should not be construed as being limited to ordinary or dictionary meanings, and should be interpreted as meanings and concepts consistent with the technical idea of the present disclosure based on the principle that the present inventors may appropriately define the concept of the terms to describe their invention in the best way. Therefore, it should be understood that the configurations shown in the drawings and embodiments described in this specification are merely the most preferred embodiments of the present disclosure, and do not represent all of the technical ideas of the present disclosure, such that there may be various equivalents and variations that replace them at the time of filing the present application.

If used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups.

To help understanding of the present disclosure, the accompanying drawings are not shown according to the actual scale, but the dimensions of some components may be exaggerated. The same reference numeral may be given to the same component in different embodiments.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

If a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

If a component is described as being "connected", "coupled", or "connected" to another component, it should be understood that the components are directly connected or connectable to each other, but another component may be "interposed" between the components, or the components may be may be "connected", "coupled", or "connected" to each other through another component. If a portion is electrically coupled to another portion, this may include not only a case where they are directly connected to each other, but also a case where they are connected with another element therebetween.

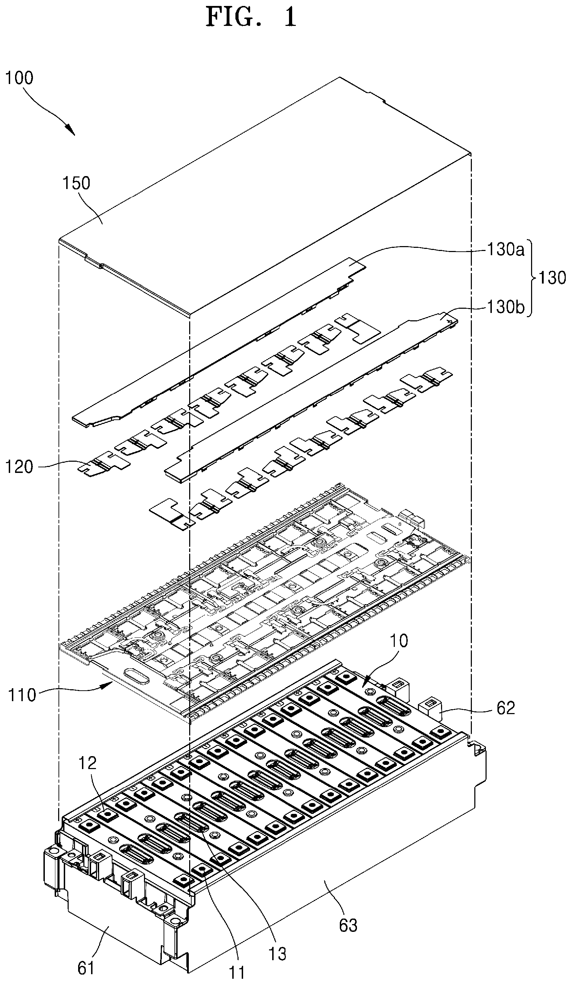

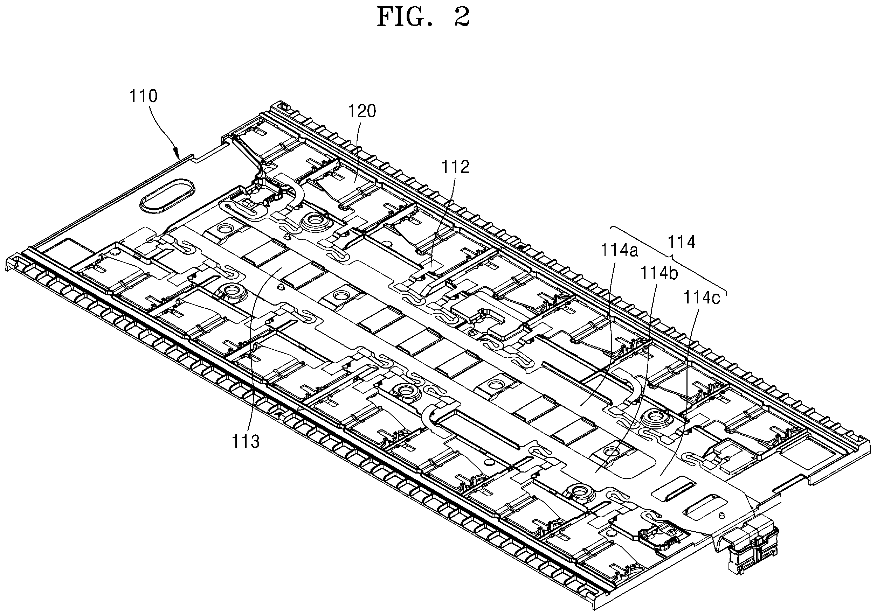

FIG. 1 is an exploded perspective view schematically showing an example of a battery module according to some embodiments of the present disclosure, and FIG. 2 is a perspective view schematically showing an example of a holder and a bus bar of the battery module of FIG. 1.

Referring to FIGS. 1 and 2 together, a battery module 100 according to some embodiments of the present disclosure may include a plurality of battery cells 10 arranged in one direction, and bus bars 120 electrically connecting any one of the plurality of battery cell 10 to another battery cell 10 adjacent thereto.

Each of the battery cells 10 may include a first terminal 11 and a second terminal 12 electrically connected through the bus bar 120 on one side and a vent portion 13 for discharging gas generated internally.

The first terminal 11 may be either a positive terminal or a negative terminal. When the first terminal 11 is a positive terminal, the second terminal 12 may be a negative terminal, and conversely, when the first terminal 11 is a negative terminal, the second terminal 12 may be a positive terminal. That is, the first terminal 11 and the second terminal 12 may be formed with different electrical polarities and are not limited to a specific polarity. The first terminal 11 of any one of the plurality of battery cells 10 may be electrically connected to the second terminal 12 of another one of the plurality of battery cells 10 adjacent thereto through the bus bar 120, and the second terminal 12 of one of the plurality of battery cells 10 may be electrically connected to the first terminal 11 of another one of the plurality of battery cells 10 adjacent thereto through another bus bar 120. Meanwhile, while serial connection is shown in FIG. 1, the present disclosure is not limited to such a structure and various connection structures may be adopted as needed. In addition, the number and arrangement of battery cells 10 are not limited to the structure shown in FIG. 1 and may be changed as needed.

Meanwhile, the plurality of arranged battery cells 10 may be accommodated by a housing. The housing may include a pair of end plates 61 and 62 facing a wide surface of the battery cell 10. The housing may also include a side plate 63 and a bottom plate (not shown) connected to the pair of end plates 61 and 62.

The side plate 63 may support the side of the battery cell 10, and the bottom plate (not shown) may support the bottom surface of the battery cell 10. In addition, the pair of end plates 61 and 62, the side plate 63, and the bottom plate may be coupled by a member such as a bolt, etc., but the present disclosure is not limited thereto. Any method for engagement may be used.

Meanwhile, the battery module 100 may further include a holder 110 positioned on the plurality of battery cells 10. The battery module 100 may accommodate the bus bars 120 and a cover portion 130 positioned on the holder 110 and covering the bus bars 120. The battery module 100 may also accommodate an upper cover 150 coupled with the housing to accommodate the plurality of battery cells 10, the holder 110, and the cover portion 130.

The housing and the upper cover 150 may be coupled using an engaging member such as a bolt, but the present disclosure is not limited thereto. Any method for engagement may be possible. That is, the housing and the upper cover 150 may be coupled to form an internal space, and the plurality of battery cells 10, the holder 110, and the cover portion 130 may be accommodated in the internal space.

Therefore, a material of the housing and the upper cover 150 may be a material that may protect the plurality of battery cells 10, the holder 110, and the cover portion 130 from mechanical shock or thermal shock. The material of the housing and the upper cover 150 may include, but is not limited to, at least one of acrylonitrile butadiene styrene (ABS), polycarbonate (PC), polypropylene (PP), aluminum, and/or stainless steel.

Meanwhile, the holder 110 may be positioned on the plurality of battery cells 10 and accommodate the bus bars 120. In addition, the holder 110 may include a sensing unit 114 that performs various protective functions to improve the stability and lifespan of the battery module 100. For example, the sensing unit 114 may be connected to a battery management system (BMS).

The sensing unit 114 may include a first sensor 114a, a second sensor 114b, a metal layer, electronic components, a protection circuit, etc., and may be electrically connected to the bus bars 120 through wires 112. One end of the wires 112 may be connected to each of the bus bars 120, and the other end of the wires 112 may be connected to the sensing unit 114.

Specifically, the sensing unit 114 may include a first sensor 114a and a second sensor 114b extending, at different locations, in a direction in which the plurality of battery cells 10 are arranged. At this time, the first sensor 114a and the second sensor 114b may be positioned parallel to each other but spaced apart from each other by a certain distance and may include a metal layer at each edge close to the bus bars 120. Accordingly, the first sensor 114a and the second sensor 114b may be electrically connected to adjacent bus bars 120 through the wires 112, respectively.

In this way, as the first sensor 114a and the second sensor 114b are arranged parallel and spaced apart from each other in the direction in which the plurality of battery cells 10 are arranged, an area of the protection circuit constituting the sensing unit 114 may be minimized. That is, by separately configuring the sensing unit 114 into the first sensor 114a and the second sensor 114b, the unnecessary area of the protection circuit may be minimized.

The first sensor 114a and the second sensor 114b may be connected to each other by a connecting member 114c. At this time, one side of the connecting member 114c may be connected to the first sensor 114a, and the other side may be connected to the second sensor 114b, such that electrical connection may be made between the first sensor 114a and the second sensor 114b.

For example, the connection may be made by any one of soldering, resistance welding, laser welding, and/or projection welding. In another example, the first sensor 114a, the second sensor 114b, and the connecting member 114c may be manufactured integrally and may be made of the same material.

The sensing unit 114 may be made of a material having relatively high electrical conductivity and elasticity and/or flexibility. When the sensing unit 114 is made of a material having elasticity or flexibility, during swelling of the battery cell 10, shock may be absorbed by the elasticity and/or flexibility of the sensing unit 114, thereby substantially limiting damage to the sensing unit 114. The material of the protection circuit included in the sensing unit 114 may be a material having elasticity or flexibility. For example, the protection circuit may be a flexible printed circuit (FPC).

Meanwhile, each of the bus bars 120 may have attached thereto a terminal for temperature measurement and/or a terminal for voltage measurement. The measured information may be transmitted to the sensing unit 114 through the wire 112 and managed in an integrated manner. For example, information such as voltage, current, temperature, etc., received by the first sensor 114a from the bus bars 120 adjacent thereto, and information such as voltage, current, temperature, etc., received by the second sensor 114b from the bus bars 120 adjacent thereto may be integrally managed by the sensing unit 114 through the connecting member 114c.

Meanwhile, each of the plurality of battery cells 10 may include a vent portion 13. In some embodiments, the vent portion 13 may be as a gas discharge passage on a top portion of the plurality of battery cells 10. The holder 110 may further include holes 113 overlapping the vent portions 13.

The hole 113 may be a discharge passage for high-temperature released gas when the high-temperature gas is discharged through the vent portion 13 as the temperature of the battery cell 10 increases.

Meanwhile, the cover portion 130 may be positioned on the holder 110 and may be coupled with the holder 110 to cover the bus bars 120. The cover portion 130 and the holder 110 may be coupled using a hook, for example, but the present disclosure is not limited thereto and various coupling methods are possible. The cover portion 130 may integrally cover the bus bars 120 spaced apart from each other as a whole, as shown in FIG. 1.

When the battery module 100 includes the cover portion 130, the cover portion 130 may protect the bus bars 120 from mechanical shock and substantially limits the bus bars 120 from being short-circuited, thereby improving the stability of the battery module 100. Specifically, when the battery module 100 experiences thermal runaway, foreign substances may occur inside the battery module 100. For example, the foreign substance may be a fragment of the destroyed battery cell 10, and the fragment may be a conductive material included in the battery cell 10. The upper cover 150 may be destroyed during the thermal runaway, and fragments of the upper cover 150 may also include conductive materials. When the battery module 100 experiences thermal runaway, the cover portion 130 may cover the bus bars 120 to substantially prevent the bus bars 120 from contacting the fragments, which may result in short-circuiting of the bus bars 120 and additional secondary thermal runaway.

Meanwhile, the cover portion 130 may include a plurality of cover portions 130a and 130b spaced apart from each other. The holes 113 of the holder 110 may be exposed between the plurality of cover portions 130a and 130b spaced apart from each other. The plurality of cover portions 130a and 130b may expose the holes 113, and when the temperature of the battery cell 10 increases, high-temperature gas may be discharged to the vent portion 13. A discharge passage for the high-temperature gas may be formed, thereby improving the stability of the battery module 100. In FIG. 1, the cover portion 130 includes the two cover portions 130a and 130b, but the number of cover portions 130 is not limited to 2 and thus may be changed as needed.

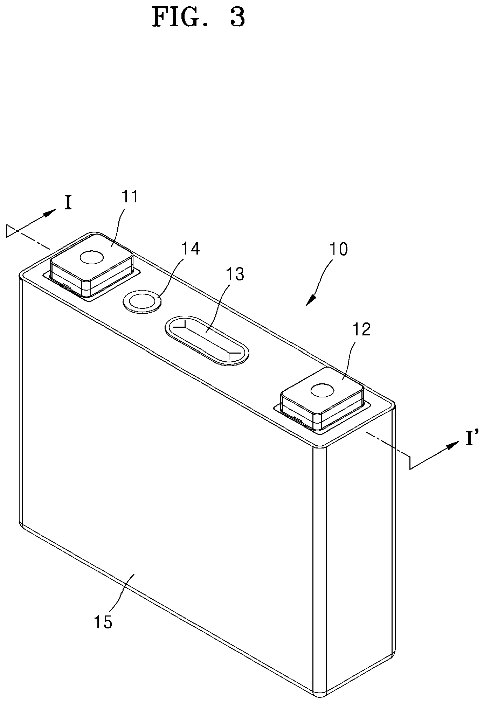

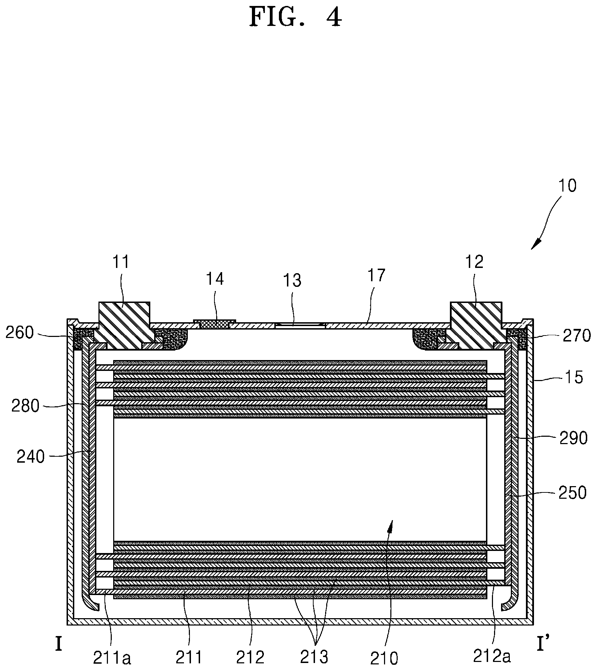

FIG. 3 is a perspective view schematically showing an example a battery cell of the battery module of FIG. 1, and FIG. 4 is a cross-sectional view schematically showing an example of a cross-section I-I' of FIG. 1.

Referring to FIGS. 3 and 4 together, the battery cell 10, according to some embodiments, may include at least one electrode assembly 210 wound between a positive electrode 211 and a negative electrode 212 with a separator 213 as an insulator interposed therebetween, and a case 15 in which the electrode assembly 210 is housed.

The battery cell 10, according to some embodiments, is described as a square lithium ion battery cell as an example. However, the present disclosure is not limited thereto, and the present disclosure may be applied to various types of battery cells such as lithium polymer battery cells or cylindrical battery cells.

The positive electrode 211 and the negative electrode 212 may include coated portions which are regions where an active material is applied to a current collector formed of a metal foil of a thin plate, and non-coated portion 211a and 212a which are regions where the active material is not coated.

The positive electrode 211 and the negative electrode 212 may be wound with the separator 213, which is an insulator, interposed therebetween. However, the present disclosure is not limited thereto, and the electrode assembly 210 may be formed in a structure where a positive electrode and a negative electrode made of a plurality of sheets are alternately laminated with a separator therebetween.

The case 15 may form the overall appearance of the battery cell 10 and may be formed of a conductive metal such as aluminum, an aluminum alloy, and/or nickel-plated steel. The case 15 may provide a space in which the electrode assembly 210 is accommodated. The battery cell 10 may include a cap plate 17 covering the opening of the case 15, and the case 15 and the cap plate 17 may be made of a conductive material. Herein, the positive and negative terminals 11 and 12 electrically connected to the positive electrode 211 or the negative electrode 212 may be installed to protrude outwardly through the cap plate 17.

In addition, outer circumferential surfaces of upper pillars of the first terminal 11 and the second terminal 12 protruding outward from the cap plate 17 can be threaded and fixed to the cap plate 17 with a nut.

However, the present disclosure is not limited thereto, and the first terminal 11 and the second terminal 12 may be formed as a rivet structure and may be riveted or welded to the cap plate 17.

In addition, the cap plate 17 may be made of a thin plate. In some embodiments, the cap plate 17 may be coupled to the opening of the case 15. In the cap plate 17, an electrolyte inlet 14, in which a sealing stopper may be installed, may be formed, and the vent portion 13 with a notch formed may be installed.

The first terminal 11 and the second terminal 12 may be electrically joined to current collectors including first and second current collectors 240 and 250 (hereinafter referred to as positive and negative current collectors). The first and second current collectors 240 and 250 may be welded to the positive uncoated portion 211a or the negative uncoated portion 212a.

For example, the first terminal 11 and the second terminal 12 may be coupled to the positive and negative current collectors 240 and 250 by welding. However, the present disclosure is not limited thereto, and the first terminal 11 and the second terminal 12 and the positive and negative current collectors 240 and 250 may be formed integrally.

An insulating member may be installed between the electrode assembly 210 and the cap plate 17. Here, the insulating member may include first and second lower insulating members 260 and 270, and each of the first and second lower insulating members 260 and 270 may be installed between the electrode assembly 210 and the cap plate 17. According to some embodiments, one end of a separating member installed facing one side of the electrode assembly 210 may be installed between the insulating member and the first terminal 11 and the second terminal 12.

The separating member may include first and second separating members 280 and 290.

Thus, ends of the first and second separating members 280 and 290 installed facing one side of the electrode assembly 210 and between the first and second lower insulating members 260 and 270 and the first terminal 11 and the second terminal 12.

Finally, the first terminal 11 and the second terminal 12 welded to the positive and negative current collectors 240 and 250 may be coupled with the first and second lower insulating members 260 and 270 and the ends of the first and second separating members 280 and 290.

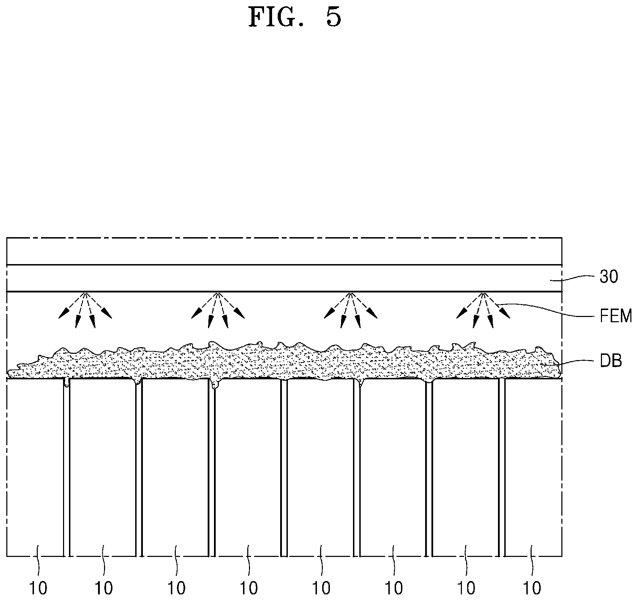

FIG. 5 is a view for briefly describing a state in which fire occurs in a battery module. Referring to FIG. 5, the battery module may include an emergency fire management system to extinguish fire in a corresponding part.

The battery module may include the plurality of battery cells 10. As an example, the plurality of battery cells 10 may be arranged to be laminated on top of each other.

The fire management system may include a tube 30 accommodating a fire extinguishing agent (FEM) therein. For example, the tube 30 may be connected to a separate nozzle which may be configured to spray an FEM to a point where fire has occurred. In another example, the tube 30 may be configured to be rupturable by heat or flame, such that when fire occurs, the tube 30 may rupture at a location adjacent to a point where the fire has occurred, and the FEM accommodated inside the tube 30 pours out from the tube 30 via the rupture.

However, as shown in FIG. 5, when fire occurs in the battery cell 10 as a junction portion (for example, a welding portion) of various components of the battery cell 10 is torn, a debris (DB) inside the battery cell 10 may leak out.

As such, when the debris DB of the battery cell 10 leaks out, a top portion of the battery cell 10 may be covered with the debris DB, and in this case, the FEM sprayed or leaking from the tube 30 may not reach the point of fire, making it difficult to early extinguish the fire. That is, the FEM may be blocked by the debris DB and thus may not flow into the inside of the battery cell 10. Moreover, as the FEM fails to reach the point of fire, the fire may spread to other adjacent cells, causing a chain fire in the battery cells 10.

In the following embodiments, the battery cell 10 and battery module according to the present disclosure may solve the foregoing problems.

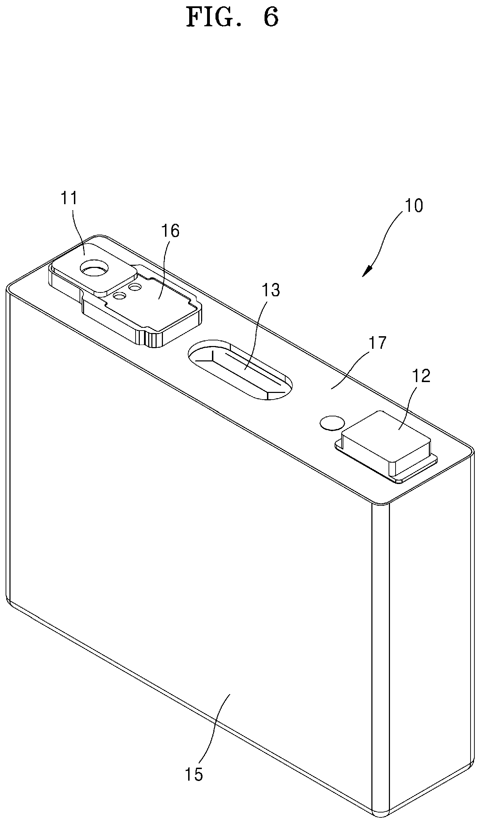

FIG. 6 is a perspective view schematically showing a battery cell, according to some embodiments of the present disclosure.

Hereinafter, for the convenience of a description, matters that are the same as previously described or are easily applied by those of ordinary skill in the art will be omitted or briefly described.

Referring to FIG. 6, the battery cell 10 according to some embodiments of the present disclosure may include the case 15, the cap plate 17, the first terminal 11, and the second terminal 12.

The case 15 may form an appearance of the battery cell 10 and have a space for accommodating an electrode assembly therein.

The case 15 may have an opening formed on one side thereof. For example, the case 15 may have the opening formed on a top side thereof. Through the opening, the electrode assembly may be inserted and installed into the case 15.

The cap plate 17 may be positioned to cover the opening of the case 15. For example, the cap plate 17 may be placed in the opening of the case 15 to seal the case 15.

In some embodiments, the cap plate 17 may be coupled to the case 15 by welding. The cap plate 17 may be formed as a thin plate. The cap plate 17 may be provided with an electrolyte inlet 14 for injecting an electrolyte.

The first terminal 11 and the second terminal 12 may be installed to protrude outwardly through the cap plate 17.

The first terminal 11 may be either a positive terminal or a negative terminal. When the first terminal 11 is a positive terminal, the second terminal 12 may be a negative terminal, and conversely, when the first terminal 11 is a negative terminal, the second terminal 12 may be a positive terminal. That is, the first terminal 11 and the second terminal 12 may be formed with different electrical polarities and are not limited to a specific polarity.

In some embodiments, the battery cell 10 may further include a terminal insulating member 16.

The terminal insulating member 16 may be placed adjacent to either the first terminal 11 or the second terminal 12. The terminal insulating member 16 may prevent an electrical short-circuit from occurring due to the first terminal 11 or the second terminal 12 unintentionally contacting another battery cell 10, an external metal component, etc. In addition, the terminal insulating member 16 may prevent fire from occurring due to thermal runaway caused by a short-circuit or overheating inside the battery cell 10.

In some embodiments, the terminal insulating member 16 may extend to cover the electrolyte inlet 14.

For example, the terminal insulating member 16 may be arranged adjacent to either the first terminal 11 or the second terminal 12, but may extend in at least one direction to cover the electrolyte inlet 14. For example, the terminal insulating member 16 may seal the electrolyte inlet 14. Thus, the terminal insulating member 16 may prevent the debris DB, the electrolyte, gas, etc., inside the case 15 from leaking out through the electrolyte inlet 14 in the event of fire in the battery cell 10.

The cap plate 17 may further include the vent portion 13.

In some embodiments, the vent portion 13 may be formed in the cap plate 17, but may be formed such that at least a part thereof is dented toward the inside of the case 15. That is, the vent portion 13 may refer to a portion formed concavely toward a side of the cap plate 17. The vent portion 13 may include a notch. Accordingly, the vent portion 13 may discharge gas generated inside the first terminal 11, the second terminal 12 and the battery cell 10 to outside.

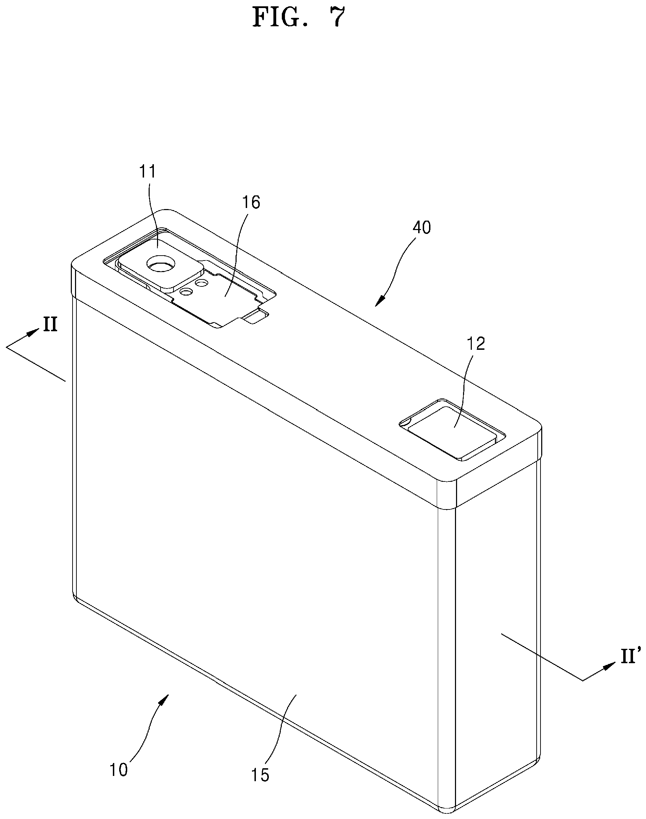

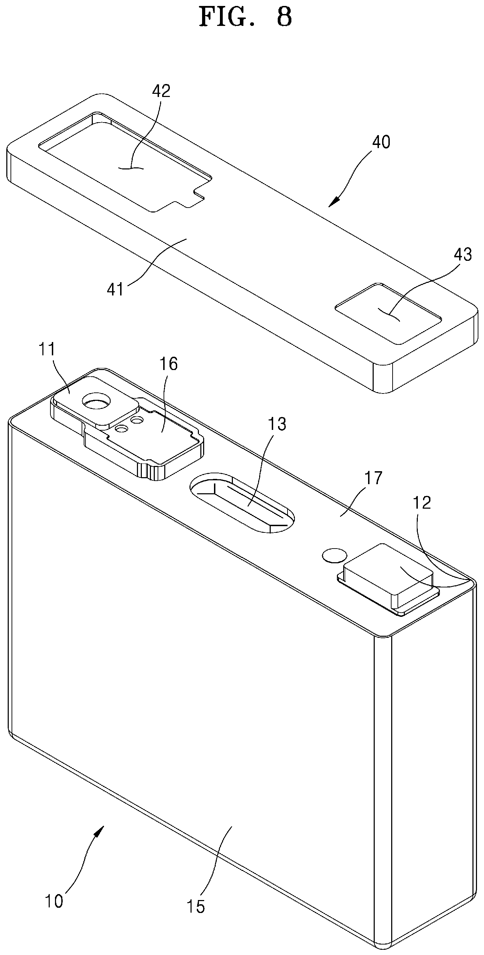

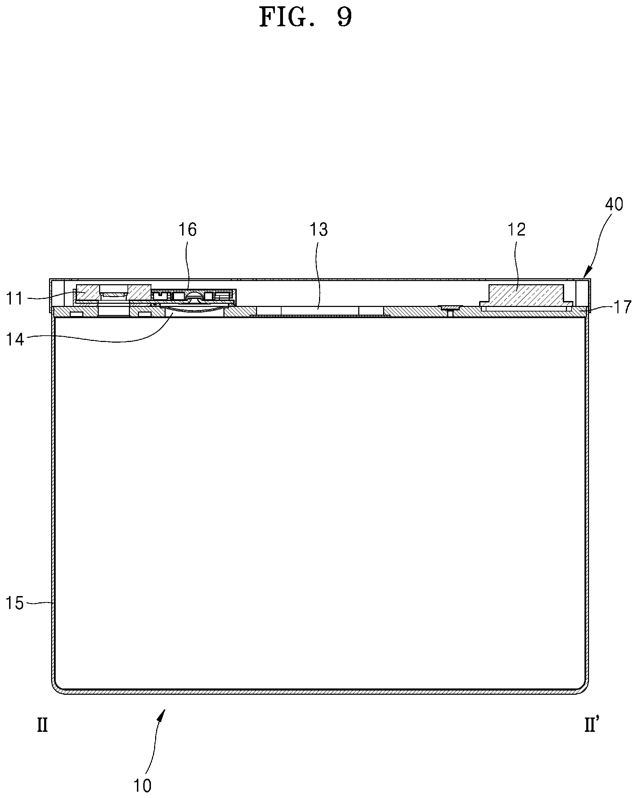

FIG. 7 is a perspective view schematically showing a battery cell according to some embodiments of the present disclosure, FIG. 8 is an exploded perspective view schematically showing the battery cell of FIG. 7, and FIG. 9 is a cross-sectional view schematically showing an example of a cross-section II-II' of FIG. 7.

Hereinafter, for the convenience of a description, matters that are the same as previously described or are easily applied by those of ordinary skill in the art will be omitted or briefly described.

Referring to FIGS. 7 to 9, the battery cell 10, according to some embodiments of the present disclosure, may include the case 15 in which a space for accommodating the electrode assembly is provided, the cap plate 17 disposed in the opening of the case 15 to seal the case 15 and the electrolyte inlet 14 formed therein, the first terminal 11 and the second terminal 12 installed to protrude outwardly through the cap plate 17, and a cell cap 40 disposed on the top side of the case 15 to cover the cap plate 17.

The cell cap 40 may be placed on the top side of the case 15. For example, the cell cap 40 may be positioned to cover the cap plate 17.

In some embodiments, the cell cap 40 may be formed so as to have a space provided therein to accommodate at least a part of the top side of the case 15. For example, the cell cap 40 may be coupled to the case 15 while accommodating the top side of the case 15 internally. That is, the cell cap 40 may be formed in the shape of a cap covering the top side of the case 15.

The cell cap 40 may cover the top portion of the case 15 and the cap plate 17 by being coupled with the top side of the case 15.

In some embodiments, the cell cap 40 may be positioned to overlap a junction portion between the case 15 and the cap plate 17. Specifically, when the case 15 and the cap plate 17 are joined by welding, the cell cap 40 may be placed to cover the junction portion between the case 15 and the cap plate 17.

In some embodiments, the cell cap 40 may be positioned to overlap the junction portion between the first terminal 11 and the cap plate 17 and the junction portion between the second terminal 12 and the cap plate 17. Specifically, when terminals 11 and 12 and the cap plate 17 are joined by welding, the cell cap 40 may be placed to cover the junction portion between the terminals 11 and 12 and the cap plate 17.

Thus, the cell cap 40 may prevent the debris DB inside the battery cell 10 from spilling outside of the battery cell 10 when the welding part is torn in the event of fire or thermal runaway in the battery cell 10.

In some embodiments, the cell cap 40 may include a material including mica. Thus, when fire or thermal runaway occurs in one battery cell 10, the cell cap 40 may prevent an electrical short-circuit by electrically insulating the battery cell 10 from other battery cells 10, other external metals, etc. Moreover, the cell cap 40 may protect the internal structure of the battery cell 10 and reduce or prevent the spread of fire when fire or thermal runaway occurs in the battery cell 10.

In some embodiments, the battery cell 10 may further include a cell cap accommodating member. The cell cap accommodating member may be a member for accommodating the cell cap 40. To this end, the cell cap accommodating member may have a space for accommodating the cell cap 40 therein.

When the cell cap 40 includes mica, it may be difficult to maintain the shape of the cell cap 40. Accordingly, the cell cap accommodating member may be formed to accommodate the cell cap 40, thus maintaining the shape of the cell cap 40.

In some embodiments, the cell cap 40 may include a material including flame-retardant silicon. Thus, when fire or thermal runaway occurs in one battery cell 10, the cell cap 40 may prevent an electrical short-circuit by electrically insulating the battery cell 10 from other battery cells 10, other external metals, etc. Moreover, the cell cap 40 may protect the internal structure of the battery cell 10 and reduce or prevent the spread of fire when fire or thermal runaway occurs in the battery cell 10.

In some embodiments, the cell cap 40 may include a first terminal hole 42 formed to allow the first terminal 11 to pass therethrough and a second terminal hole 43 formed to allow the second terminal 12 to pass therethrough.

Thus, the cell cap 40 may be placed on the cap plate 17 to surround the first terminal 11 and the second terminal 12.

In some embodiments, the first terminal hole 42 and the second terminal hole 43 may be formed in a shape corresponding to the first terminal 11 and the second terminal 12. In this case, when the cell cap 40 is placed on the cap plate 17, the cell cap 40 may be placed so as to overlap the junction portion between the first terminal 11 and the cap plate 17 and the junction portion between the second terminal 12 and the cap plate 17.

In some embodiments, the cell cap 40 may be positioned to cover the top side of the vent portion 13 formed in the cap plate 17. At this time, the cell cap 40 may be placed on the top side of the vent portion 13 to maintain the dented part of the vent portion 13.

In some embodiments, the cell cap 40 may include a cap body 41 formed in the shape of a plate. The cap body 41 may be placed on the cap plate 17. Accordingly, when the cell cap 40 is placed on the cap plate 17, the cap body 41 may be placed to cover the top side of the vent portion 13, and the dented part of the vent portion 13 may be maintained. In this way, even when fire or thermal runaway occurs in the battery cell 10, a phenomenon of heat being transferred through the vent portion 13 may be reduced or prevented.

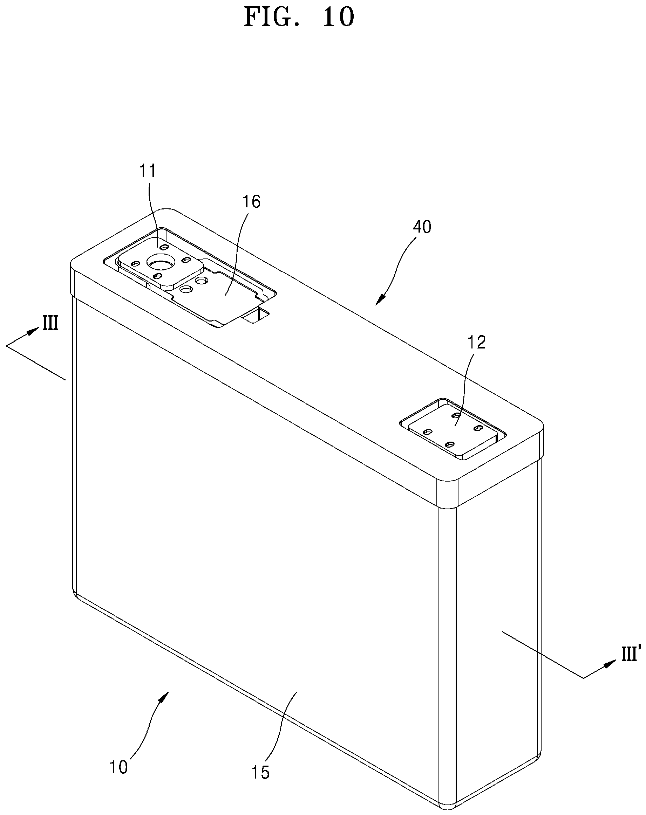

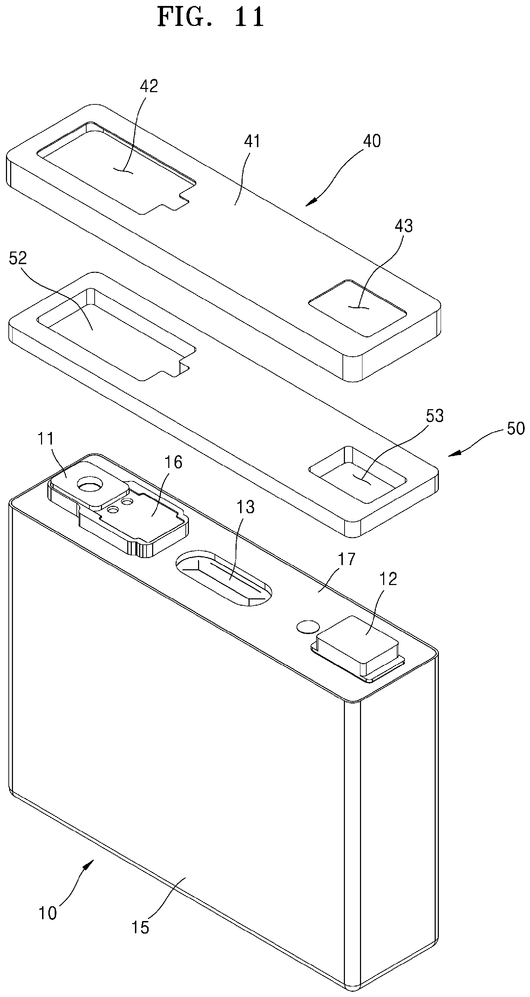

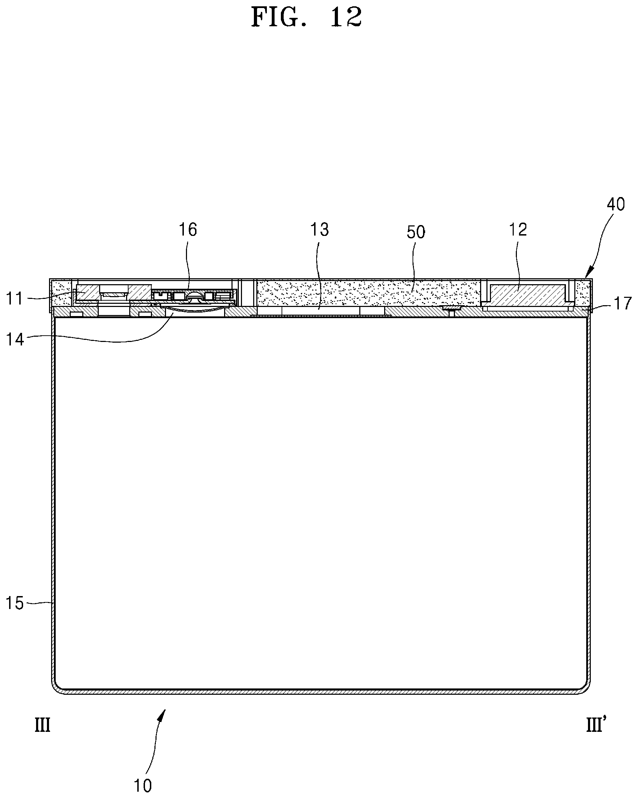

FIG. 10 is a perspective view schematically illustrating a battery cell according to another embodiment of the present invention, FIG. 11 is an exploded perspective view schematically illustrating the battery cell of FIG. 10, and FIG. 12 is a cross-sectional view schematically showing an example of a cross-section III-III' of FIG. 10.

Hereinafter, for the convenience of a description, matters that are the same as previously described or are easily applied by those of ordinary skill in the art will be omitted or briefly described.

Referring to FIGS. 10 to 12, the battery cell 10 according to some embodiments of the present disclosure may include the case 15 in which a space for accommodating the electrode assembly is provided, the cap plate 17 disposed in the opening of the case 15 to seal the case 15 and the electrolyte inlet 14 formed therein, the first terminal 11 and the second terminal 12 installed to protrude outwardly through the cap plate 17, an upper insulating member 50 disposed on the top side of the case 15 to cover at least a part of the cap plate 17, and the cell cap 40 including a space for accommodating the upper insulating member 50.

The upper insulating member 50 may be placed on the top side of the cap plate 17. For example, the upper insulating member 50 may be positioned to cover at least a part of the cap plate 17.

In some embodiments, the upper insulating member 50 may be positioned to overlap a junction portion between the case 15 and the cap plate 17. Specifically, when the case 15 and the cap plate 17 are joined by welding, the upper insulating member 50 may be placed to cover the junction portion between the case 15 and the cap plate 17.

In some embodiments, the upper insulating member 50 may be positioned to overlap the junction portion between the first terminal 11 and the cap plate 17 and the junction portion between the second terminal 12 and the cap plate 17. Specifically, when terminals 11 and 12 and the cap plate 17 are joined by welding, the upper insulating member 50 may be placed to cover the junction portion between the terminals 11 and 12 and the cap plate 17.

Thus, the upper insulating member 50 may prevent the debris DB inside the battery cell 10 from spilling outside of the battery cell 10 when the welding part is torn in the event of fire or thermal runaway in the battery cell 10.

In some embodiments, the upper insulating member 50 may include a material including mica. Thus, when fire or thermal runaway occurs in one battery cell 10, the upper insulating member 50 may prevent an electrical short-circuit by electrically insulating the battery cell 10 from other battery cells 10, other external metals, etc. Moreover, the upper insulating member 50 may protect the internal structure of the battery cell 10 and reduce and/or prevent the spread of fire when fire or thermal runaway occurs in the battery cell 10.

In some embodiments, the battery cell 10 may further include the cell cap 40. The cell cap 40 may be a member for accommodating the upper insulating member 50. To this end, the cell cap 40 may have a space for accommodating the upper insulating member 50 therein.

When the upper insulating member 50 includes mica, it may be difficult to maintain the shape of the upper insulating member 50. Thus, the cell cap 40 may formed to accommodate the upper insulating member 50 such that that the shape of the upper insulating member 50 may be maintained.

In some embodiments, the cell cap 40 may include a material including a synthetic resin material so as to maintain the shape of the upper insulating member 50. For example, the cell cap 40 may be formed of a material including, but not limited to, polyethylene (PE), polycarbonate (PC), polypropylene (PP), polyamide (PA), etc.

In some embodiments, the cell cap 40 may include a first terminal hole 42 formed to allow the first terminal 11 to pass therethrough and a second terminal hole 43 formed to allow the second terminal 12 to pass therethrough. Moreover, the upper insulating member 50 may include a third terminal hole 52 formed to overlap the first terminal hole 42 in at least a part thereof and a fourth terminal hole 53 formed to overlap the second terminal hole 43 in at least a part thereof.

Thus, the upper insulating member 50 may be placed on the cap plate 17 to surround the first terminal 11 and the second terminal 12.

In some embodiments, the third terminal hole 52 and the fourth terminal hole 53 may be formed in a shape corresponding to the first terminal 11 and the second terminal 12. In this case, when the upper insulating member 50 is placed on the cap plate 17, the upper insulating member 50 may be placed so as to overlap the junction portion between the first terminal 11 and the cap plate 17 and the junction portion between the second terminal 12 and the cap plate 17.

The third terminal hole 52 is formed to overlap the first terminal hole 42 in at least a part thereof and the fourth terminal hole 53 is formed to overlap the second terminal hole 43 in at least a part thereof. When fire or thermal runaway occurs in the battery cell 10 and the junction portion between the first terminal hole 42 and the cap plate 17 and/or the junction portion between the second terminal hole 43 and the cap plate 17 is torn, it may be possible to substantially limit the debris DB from pouring out from the inside of the cell to the outside.

In some embodiments, the upper insulating member 50 may include an insulating material and a thermal insulating material. For example, the upper insulating member 50 may include both an insulating material and a thermal insulating material, thereby performing both an insulation function and a thermal insulation function when fire or thermal runaway occurs in the battery cell 10.

In some embodiments, the insulating material may be mica, and the thermal insulating material may be silica aerogel, but the present disclosure is not limited thereto.

In some embodiments, the insulating material and the thermal insulating material may be formed in a layered structure.

In some embodiments, the upper insulating member 50 may be positioned to cover the top side of the vent portion 13 formed in the cap plate 17. At this time, the upper insulating member 50 may be placed on the top side of the vent portion 13 to maintain the dented part of the vent portion 13.

In some embodiments, the upper insulating member 50 may have a portion disposed on the cap plate 17 in the shape of a plate. Accordingly, when the upper insulating member 50 is placed on the cap plate 17, the upper insulating member 50 may be placed to cover the top side of the vent portion 13, and the dented part of the vent portion 13 may be maintained.

In this way, even when fire or thermal runaway occurs in the battery cell 10, a phenomenon of heat being transferred through the vent portion 13 may be reduced or prevented.

As such, the battery cell and the battery module according to some embodiments of the present disclosure may include a member that performs an insulating function for each cell, thereby preventing heat from spreading to other adjacent cells even when fire or thermal runaway occurs in one battery cell.

Moreover, the battery cell and the battery module, according to some embodiments of the present disclosure, may have a member that functions as a cap for each cell. The cap for each cell may substantially limit problems related to fire or thermal runaway. When fire or thermal runaway occurs in any one battery cell and the battery cell is torn, the debris inside the battery cell leaks out, leading to a failure of the FEM to flow to the point of the fire.

The present disclosure may provide a battery cell with improved safety and stability and a battery module including the battery cell.

However, effects that may be obtained through the present disclosure are not limited to the above-described effects, and other technical effects not mentioned may be clearly understood by those of ordinary skill in the art from the description of the present disclosure described below.

While the present disclosure is described by limited embodiments and drawings, the present disclosure is not limited thereby and various modifications and changes may be made by those of ordinary skill in the art within the technical scope of the present disclosure and as defined by the claims set forth below.

## Claims

1. A battery cell comprising:
a case comprising a space configured to accommodate an electrode assembly;
a cap plate, placed in an opening of the case, configured to seal the case and comprising an electrolyte inlet formed therein;
a first terminal and a second terminal installed to protrude outwardly through the cap plate; and
a cell cap placed on a top side of the case such that the cap plate is covered.

2. The battery cell of claim 1, further comprising a terminal insulating member placed adjacent to the first terminal and/or the second terminal.

3. The battery cell of claim 1 or claim 2, wherein the cell cap comprises a space therein to accommodate at least a part of the top side of the case.

4. The battery cell of any preceding claim, wherein
(A) the cell cap is placed to overlap a junction portion between the case and the cap plate; and/or
(B) the cell cap includes a material including mica;
and/or
(C) the battery cell further includes a cell cap accommodating member configured to accommodate the cell cap..

5. The battery cell of any preceding claim, wherein the cell cap comprises:
a first terminal hole positioned such that the first terminal passes through the first terminal hole; and
a second terminal hole positioned such that the second terminal passes through the second terminal hole.

6. The battery cell of any preceding claim, wherein the cap plate comprises a vent portion comprising a notch, and at least a part of the vent portion is dented toward the inside of the case.

7. The battery cell of claim 6, wherein the cell cap is placed such that the cell cap covers the top side of the vent portion such that the dented part of the vent portion is maintained.

8. A battery cell comprising:
a case comprising a space configured to accommodate an electrode assembly;
a cap plate, placed in an opening of the case, configured to seal the case and comprising an electrolyte inlet formed therein;
a first terminal and a second terminal installed to protrude outwardly through the cap plate;
an upper insulating member placed on the top side of the case configured to cover at least a part of the cap plate; and
a cell cap comprising a space configured to accommodate the upper insulating member.

9. The battery cell of claim 8, wherein the upper insulating member is placed such that the upper insulating member overlaps with a junction portion between the case and the cap plate.

10. The battery cell of claim 8 or claim 9, wherein the cell cap comprises:
a first terminal hole positioned such that the first terminal passes through the first terminal hole; and
a second terminal hole positioned such that the second terminal passes through the second terminal hole.

11. The battery cell of claim 10, wherein
(A) the upper insulating member comprises:
a third terminal hole positioned to overlap the first terminal hole in at least a part thereof; and
a fourth terminal hole positioned to overlap the second terminal hole in at least a part thereof;
and/or
(B) the upper insulating member includes a material including mica;
and/or
(C) the cell cap includes a material including a synthetic resin material configured to maintain a shape of the upper insulating member;
and/or
(D) the upper insulating member includes an insulating material and a thermal insulating material; and, optionally, wherein the insulating material and the thermal insulating material are formed in a layered structure.

12. The battery cell of any of claims 8 to 11, wherein the upper insulating member comprises:
an insulating material; and
a thermal insulating material,
wherein the insulating material and the thermal insulating material are formed in a layered structure.

13. The battery cell of any of claims 8 to 12, wherein the cap plate comprises a vent portion comprising a notch, and at least a part of the vent portion is dented toward inside of the case.

14. The battery cell of claim 13, wherein the upper insulating member is formed in a shape configured to cover the top side of the vent portion such that the dented part of the vent portion is maintained.

15. A battery module comprising a battery cell according to any preceding claim.
